# EUROPEAN PATENT APPLICATION

(11) **EP 4 746 494 A1**
(43) Date of publication of application: **20.05.2026**
(21) Application number: 23944602.4
(22) Date of filing: 10.07.2023
(51) Int. Cl.: H04W 24/04

(54) **COMMUNICATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN); FU, Ting, Beijing 100085 (CN)
(74) Representative: Dehns Germany Partnerschaft mbB
(86) International application number: PCT/CN2023/106511
(87) International publication number: WO 2025/010579

(57) **Abstract**

Provided in the embodiments of the present disclosure are a communication method and apparatus, and a communication device, a communication system and a storage medium. The communication method comprises: a first device sending a first transmission to a second device, wherein the first transmission is used for triggering an enhanced transmission between the second device and the first device; and the first device receiving a second transmission sent by the second device, wherein the second transmission is the enhanced transmission, which is performed by the second device according to the first transmission.

## Description

### TECHNICAL FIELD

The present disclosure relates to the field of communication and, specifically, to a communication method, an apparatus, a communication device, a communication system and a storage medium.

### BACKGROUND

Internet of things (IoT) devices are generally low-power devices, therefore IoT devices may also maintain relatively long periods of work based on their own batteries. However, the battery's lifespan is limited; once the battery life is exhausted, the IoT device is to stop working, thereby affecting the user.

### SUMMARY

With the development of technology, it is required to improve the communication reliability of backscatter transmission devices.

Some embodiments of the present disclosure provide a communication method, an apparatus, a communication device, and a storage medium.

A first aspect of some embodiments of the present disclosure provides a communication method, including:
sending, by a first device, a first transmission to a second device, where the first transmission is used for triggering an enhanced transmission between the second device and the first device; and
receiving, by the first device, a second transmission sent by the second device, where the second transmission is an enhanced transmission performed by the second device based on the first transmission.

A second aspect of some embodiments of the present disclosure provides a communication method, including:
receiving, by a second device, a first transmission sent by a first device, where the first transmission is used for triggering an enhanced transmission between the second device and the first device; and
sending, by the second device, a second transmission to the second device in response to triggering of the first transmission, where the second transmission is an enhanced transmission performed by the second device based on the first transmission.

A third aspect of some embodiments of the present disclosure provides a first device, including:
a sending module, configured to send a first transmission to a second device; where the first transmission is used for triggering an enhanced transmission between the second device and the first device; and
a receiving module, configured to receive a second transmission sent by the second device, where the second transmission is an enhanced transmission performed by the second device based on the first transmission.

A fourth aspect of some embodiments of the present disclosure provides a second device, including:
a receiving module, configured to receive a first transmission sent by a first device, where the first transmission is used for triggering an enhanced transmission between the second device and the first device; and
a sending module, configured to send a second transmission to the second device in response to a triggering of the first transmission, where the second transmission is an enhanced transmission performed by the second device based on the first transmission.

A fifth aspect of some embodiments of the present disclosure provides a communication method, including:
a communication method according to any embodiment of the first aspect performed by the first device; and
a communication method according to any embodiment of the second aspect performed by the second device.

A sixth aspect of some embodiments of the present disclosure provides a communication device, including:
one or more processors;
where the processor is configured to, through calling an instruction, cause the communication device to implement the communication method according to any embodiment of the first aspect or the second aspect.

A seventh aspect of some embodiments of the present disclosure provides a storage medium storing an instruction, where the instruction, upon being executed on a communication device, causes the communication device to implement the communication method according to any embodiment of the first aspect or the second aspect.

The technical solutions provided in the embodiments of the present disclosure enable the reliable transmission of information by the second device in response to the triggering of the first device for the first transmission.

It should be understood that the foregoing general description and the following detailed description are exemplary and explanatory only, and do not limit the present disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the present disclosure.
FIG. 1A is a schematic architectural diagram of a communication system according to an exemplary embodiment.
FIG. 1B is a schematic diagram illustrating wireless communication based on a backscatter transmission mechanism according to an exemplary embodiment.
FIG. 1C is a topology diagram illustrating wireless communication based on a backscatter transmission mechanism according to an exemplary embodiment.
FIG. 1D is a schematic diagram illustrating wireless communication based on a backscatter transmission mechanism according to an exemplary embodiment.
FIG. 1E is a topology diagram illustrating wireless communication based on a backscatter transmission mechanism according to an exemplary embodiment.
FIG. 1F is a topology diagram illustrating wireless communication based on a backscatter transmission mechanism according to an exemplary embodiment.
FIG. 1G a schematic diagram illustrating three types of devices that perform wireless communication based on backscatter transmission mechanisms according to an exemplary embodiment.
FIG. 2A is a flowchart illustrating a communication method according to an exemplary embodiment.
FIG. 2B is a flowchart illustrating a communication method according to an exemplary embodiment.
FIG. 2C is a flowchart illustrating a communication method according to an exemplary embodiment.
FIG. 2D is a flowchart illustrating a communication method according to an exemplary embodiment.
FIG. 2E is a flowchart illustrating a communication method according to an exemplary embodiment.
FIG. 3 is a flowchart illustrating a communication method according to an exemplary embodiment.
FIG. 4 is a flowchart illustrating a communication method according to an exemplary embodiment.
FIG. 5 is a structural schematic diagram of a first device according to an exemplary embodiment.
FIG. 6 is a structural schematic diagram of a first device according to an exemplary embodiment.
FIG. 7A is a structural schematic diagram of a first device according to an exemplary embodiment.
FIG. 7B is a structural schematic diagram of a second device according to an exemplary embodiment.

### DETAILED DESCRIPTION

Some embodiments of the present disclosure provide a communication method, an apparatus, a communication device, and a storage medium.

A first aspect of some embodiments of the present disclosure provides a communication method, including: sending, by a first device, a first transmission to a second device, where the first transmission is used for triggering an enhanced transmission between the second device and the first device;
receiving, by the first device, a second transmission sent by the second device, where the second transmission is an enhanced transmission performed by the second device based on the first transmission.

In some embodiments, the first device may send the first transmission which is used for stimulating the second device, thereby enabling reliable transmission to be achieved between the first device and the second device.

Based on some embodiments of the first aspect, the method includes the followings.

The first device sends the first transmission to the second device, including the followings.

The first device repeatedly sends the first transmission to the second device, where, a single sending of the first transmission is used for triggering a single sending of the second transmission by the second device.

Based on the above embodiments, in the embodiments, enhanced transmission between the first device and the second device is achieved through repeated transmission.

Based on some embodiments of the first aspect, the method further includes the followings.

The first transmission includes:
a first indication, used for determining, by the second device, a remaining number of triggering of the first transmission.

Based on the foregoing solutions, the first transmission includes the first indication, such that after receiving the first transmission, the second device can determine the remaining number of triggering for the current information (or the current communication round) transmission.

Based on some embodiments of the first aspect,
the first indication indicates at least one of the followings:
a total number of triggering of the first device;
a current number of triggering of the first device;
a remaining number of triggering of the first device; and
a last time triggering of the first device.

The above technical solutions of the first transmission provide specific examples of the first indication.

Based on some embodiments of the first aspect, the first indication, carried in the first transmission sent for a first time by the first device, indicates a total number of triggering of the first transmission; or, the first indication, carried in the first transmission sent for a last time by the first device, indicates that the first transmission sent this time is used for a last time triggering.

Based on some embodiments of the first aspect, receiving the second transmission returned by the second device in response to triggering of the first transmission includes: receiving, by the first device, multiple second transmissions repeatedly sent by the second device.

Based on the foregoing solutions, when the first device repeatedly sends the triggered first transmission, the second device may also repeatedly send the second transmission.

Based on some embodiments of the first aspect, the second transmission includes: a second indication, indicating information of being triggered of the second device.

Based on the foregoing solutions, the second indication carried in the second transmission may indicate the information that the second device is actually triggered, thereby facilitating the consistency of triggering between the first device and the second device.

Based on some embodiments of the first aspect, the second indication, carried in a first one of second transmissions sent by the second device, indicates a total number of times of being triggered expected by the second device; and/or, the second indication, carried in a last one of second transmissions sent by the second device, indicates that a triggering corresponding to a second transmission sent this time is a last time of being triggered expected by the second device.

In some cases, the second transmission is not to carry the second indication every time; it can carry the corresponding indication in the first or last transmission, thereby completing the sending of the information of being triggered.

Based on some embodiments of the first aspect, sending, by the first device, the first transmission to the second device includes the followings.

The first device sends the first transmission processed by redundancy encoding to the second device.

Based on the foregoing solutions, the problem of low transmission reliability caused by channel interference is reduced through redundancy encoding, thereby improving transmission reliability.

Based on some embodiments of the first aspect, receiving the second transmission returned by the second device in response to triggering of the first transmission includes: receiving the second transmission processed by redundancy encoding and returned by the second device in response to triggering of the first transmission.

Based on the foregoing solutions, redundancy encoding is used for information transmission from the first device to the second device, and redundancy transmission is also used for transmission from the second device to the first device, thereby ensuring the reliability of uplink transmission.

Based on some embodiments of the first aspect, the redundancy encoding includes:
repetition coding, where, for the repetition coding, one bit to be encoded is repetition-coded into N identical bits, where N is a positive integer greater than or equal to 2; or,
mapping coding, where, for the mapping coding, one bit is mapped to a bit sequence including M bits; where M is a positive integer greater than or equal to 2, and the M bits of the bit sequence have identical or different bit values.

Some embodiments of the present disclosure provide two specific manners of repetition coding and mapping coding.

Based on some embodiments of the first aspect, receiving the second transmission returned by the second device in response to triggering of the first transmission includes: receiving the second transmission that is repeatedly sent by the second device, based on a single triggering of the first transmission, on at least one channel or at least one subchannel.

Based on the foregoing solutions, repeated returning of the second transmission on multiple channels or subchannels during uplink transmission can improve at least the reliability of the uplink transmission.

Based on some embodiments of the first aspect, the at least one channel or the at least one subchannel is configured by a network device, or,
the at least one channel or the at least one subchannel is specified by a protocol, or,
the at least one channel or the at least one subchannel is selected by the second device.

Based on the foregoing solutions, specific implementations of the second device selecting a channel or subchannel are provided.

Based on some embodiments of the first aspect, receiving the second transmission returned by the second device in response to triggering of the first transmission includes: receiving multiple second transmissions that are sent by the second device, based on a single triggering of the first transmission, on at least one transmission occasion.

Based on the foregoing solutions, the second transmission is repeatedly sent in the time domain, so that the reliability assurance of the uplink transmission is achieved through time domain gain.

Based on some embodiments of the first aspect, the at least one transmission occasion is configured by a network device, or,
the at least one transmission occasion is specified by a protocol, or,
the at least one transmission occasion is selected by the second device.

In the second aspect, a communication method includes the followings.

The second device receives the first transmission sent by the first device.

The second transmission is sent to the second device in response to triggering of the first transmission.

Based on some embodiments of the second aspect, receiving, by the second device, information sent by the first device includes the followings.

The first transmission repeatedly sent by the second device is received.

Based on some embodiments of the second aspect, the first transmission includes:
a first indication, used for determining, by the second device, a remaining number of triggering of the first transmission.

Based on some embodiments of the second aspect, the first indication indicates at least one of the followings:
a total number of triggering of the first device;
a current number of triggering of the first device;
a remaining number of triggering of the first device; and
a last time triggering of the first device.

Based on some embodiments of the second aspect, the first indication, carried in the first transmission sent for a first time by the first device, is used for indicating a total number of triggering of the first transmission;
or,
the first indication, carried in the first transmission sent for a last time by the first device, indicates the first indication of being triggered last time.

Based on some embodiments of the second aspect, sending the second transmission to the second device in response to the triggering of the first transmission includes the followings.

The second transmission is repeatedly sent to the second device in response to the triggering of the first transmission.

Based on some embodiments of the second aspect, the second transmission includes:
a second indication, indicating information of being triggered of the second device.

Based on some embodiments of the second aspect, the second indication indicates at least one of the followings:
an expected total number of times of being triggered;
a current number of times of being triggered;
an expected remaining number of times of being triggered; and
an expected last time of being triggered.

Some embodiments of the second aspect are referenced.

The second indication, carried in a second transmission received by the first device for the first time, is used for indicating the expected total number of times of being triggered for the second device;
and/or,
the second indication, carried in a second transmission received for the last time, is used for indicating that the last time of being triggered expected by the second device.

Based on some embodiments of the second aspect, receiving, by the second device, the first transmission sent by the first device includes: receiving the first transmission processed by redundancy encoding and sent by the first device;
and/or,
sending the second transmission to the second device in response to the triggering of the first transmission includes: sending the second transmission processed by redundancy encoding to the second device in response to the triggering of the first transmission.

Based on some embodiments of the second aspect, the redundancy encoding includes:
repetition coding, where, for the repetition coding, one bit to be encoded is repetition-coded into N identical bits, where N is a positive integer greater than or equal to 2;
mapping coding, where, for the mapping coding, one bit is mapped to a bit sequence including M bits; where M is a positive integer greater than or equal to 2, and the M bits of the bit sequence have identical or different bit values.

Based on some embodiments of the second aspect, sending the second transmission to the second device in response to the triggering of the first transmission includes the followings.

The second transmission is repeatedly sent, on multiple channels or multiple subchannels, to the second device in response to the triggering of a single first transmission.

Based on some embodiments of the second aspect, the at least one channel or the at least one subchannel is configured by a network device, or,
the at least one channel or the at least one subchannel is specified by a protocol, or,
the at least one channel or the at least one subchannel is selected by the second device.

Based on some embodiments of the second aspect, the method further includes the followings.

The at least one channel or the at least one subchannel is selected based on a device identity of the second device, a task identity associated with the second transmission, and/or a device identity of the first device.

Based on some embodiments of the second aspect, sending the second transmission to the second device in response to the triggering of the first transmission includes the followings.

The second transmission is repeatedly sent, on multiple transmission occasions, to the second device in response to the triggering of the first transmission.

Based on some embodiments of the second aspect, the at least one transmission occasion is configured by a network device, or,
the at least one transmission occasion is specified by a protocol, or,
the at least one transmission occasion is selected by the second device.

Based on some embodiments of the second aspect, the method further includes the followings.

The at least one transmission occasion is selected based on a device identity of the second device, a task identity associated with the second transmission, and/or a device identity of the first device.

In the third aspect, a first device is provided, including:
a sending module, configured to send a first transmission to a second device; where the first transmission is used for triggering an enhanced transmission between the second device and the first device;
a receiving module, configured to receive a second transmission sent by the second device, where the second transmission is an enhanced transmission performed by the second device based on the first transmission.

In the fourth aspect, a second device includes:
a receiving module, configured to receive a first transmission sent by a first device, where the first transmission is used for triggering an enhanced transmission between the second device and the first device;
a sending module, configured to send a second transmission to the second device in response to a triggering of the first transmission, where the second transmission is an enhanced transmission performed by the second device based on the first transmission.

In the fifth aspect, a communication method includes:
a communication method according to any technical solution of the first aspect performed by the first device;
a communication method according to any technical solution of the second aspect performed by the second device.

In the sixth aspect, some embodiments of the present disclosure provide a communication device, including:
one or more processors;
where, the processor is configured to, through calling an instruction, cause the communication device to implement the communication method according to the optional implementation of the first aspect, second aspect, or fifth aspect.

In the seventh aspect, some embodiments of the present disclosure provide a storage medium storing an instruction, where the instruction, upon being executed on a communication device, causes the communication device to implement the communication method according to the optional implementations of the first aspect, second aspect, or fifth aspect.

In the eighth aspect, some embodiments of the present disclosure provide a program product that, when executed by a communication device, causes the communication device to perform the communication method described in any optional implementation of the first aspect, the second aspect, or the fifth aspect.

In the ninth aspect, some embodiments of the present disclosure provide a computer program which, when executed on a computer, causes the computer to perform the communication method described in any optional implementation of the first aspect, the second aspect, or the fifth aspect.

It can be understood that the foregoing first device, second device, communication device, communication system, storage medium, program product, and computer program are all used for implementing the method provided in the embodiments of the present disclosure. Therefore, the beneficial effects achievable may be referred to in the descriptions of the corresponding method, which are not repeated herein.

Some embodiments of the present disclosure provide a communication method, an apparatus, a communication device, a communication system, and a storage medium. In some embodiments, the term "communication method" may be used interchangeably with "information processing method"; the term "information indicating apparatus" may be used interchangeably with "information processing apparatus" or "information transmission apparatus"; and the term "communication system" may be used interchangeably with "information processing system".

Such embodiments of the present disclosure are not exhaustive, but merely illustrative of some embodiments, which are not intended to limit the protection scope of the present disclosure. Unless conflict occurred, each step in a particular embodiment can be implemented as an independent embodiment, and the steps can be freely combined. For example, a solution derived by removing some steps in a particular embodiment may also be implemented as an independent embodiment, and the order of the steps in a particular embodiment may be freely interchanged. Furthermore, the optional implementation manners in a particular embodiment can be freely combined. Moreover, the embodiments may be freely combined with each other, for example, portions or the entirety of steps of different embodiments may be freely combined, and a particular embodiment may be freely combined with the optional implementation manners of other embodiments.

In each of the embodiments of the present disclosure, unless otherwise specified or logical conflict occurred, the terms and/or descriptions of the embodiments are consistent and may be referenced by each other. Technical features in different embodiments may be combined to form new embodiments based on their inherent logical relationships.

The terms used in the embodiments of the present disclosure are for the purpose of describing particular embodiments only, which is not intended to limit the scope of the present disclosure.

In the embodiments of the present disclosure, unless otherwise stated, elements expressed in the singular form, such as "a", "an", "the", "above-mentioned", "said", "foregoing", "this" may mean "one and only one", or "one or more", "at least one" and the like. For example, when articles, such as "a", "an", "the", are used in translation, the noun following the article may be understood as either a singular or a plural expression.

In the embodiments of the present disclosure, "multiple/a plurality of' refers to two or more.

In some embodiments, the terms "at least one of", "one or more", "a plurality of", and "multiple" may be used interchangeably.

In some embodiments, the expressions "at least one of A and B", "A and/or B", "A in one case and B in another", "in response to one case A, in response to another case B", and the like, may include the following technical solutions according to the situation: in some embodiments, A (A is executed regardless of B); in some embodiments, B (B is executed regardless of A); in some embodiments, execution is selected from A and B (A and B are selectively executed); in some embodiments, A and B (both A and B are executed). The same applies when there are more branches such as A, B, C.

In some embodiments, the expressions "A or B" may include the following technical solutions according to the situation: in some embodiments, A (A is executed regardless of B); in some embodiments, B (B is executed regardless of A); in some embodiments, execution is selected from A and B (A and B are selectively executed). The same applies when more elements such as A, B, C exist.

The prefixes such as "first" and "second" in some embodiments of the present disclosure are merely used for distinguishing different descriptive objects and do not impose restrictions on the position, order, priority, quantity, or content of the descriptive objects. The description of the descriptive objects is found in the claims or the context of the embodiments, and the use of prefixes should not constitute unnecessary restrictions. For example, if the descriptive object is a "field", the ordinal numbers preceding "field" in "first field" and "second field" do not restrict the position or order of the "fields". "First" and "second" do not restrict whether the "fields" they modify are in the same message, nor do they restrict the order of "first field" and "second field". For example, if the descriptive object is a "level", the ordinal numbers preceding "level" in "first level" and "second level" do not restrict the priority between "levels". For example, the number of descriptive objects is not limited by ordinal numbers and may be one or more. For example, as for "first apparatus", the number of "apparatuses" may be one or more. Furthermore, the objects modified by different prefixes may be the same or different. For example, if the object is described as "apparatus", then "first apparatus" and "second apparatus" may be the same apparatus or different apparatuses, and their types may be the same or different. For example, if the object is described as "information", then "first information" and "second information" may be the same information or different information, and their content may be the same or different.

In some embodiments, "including A", "containing A", "indicating A", and "carrying A" may be interpreted as directly carrying A or indirectly indicating A.

In some embodiments, the terms "in response to...", "in response to determining...", "in the case of...", "when...", "upon...", "if..." and the like may be used interchangeably.

In some embodiments, the terms "greater than," "greater than or equal to," "not less than," "more than," "more than or equal to," "not fewer than," "higher than," "higher than or equal to," "not lower than," and "above" may be used interchangeably. The terms "less than," "less than or equal to," "not greater than," "fewer than," "fewer than or equal to," "not more than," "lower than," "lower than or equal to," "not higher than," and "below" may also be used interchangeably.

In some embodiments, the apparatus or the like may be interpreted as physical or virtual, and their names are not limited to the names recorded in the embodiments. The terms such as "apparatus," "equipment," "device," "circuit," "network element," "node," "function," "unit," "section," "system," "network," "chip," "chip system," "entity," and "subject" may be used interchangeably.

In some embodiments, "network" may be interpreted as apparatus included in the network, such as access network devices, and core network devices.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, an access network device, a core network device, or a network device may be replaced with a terminal. For example, the embodiments of the present disclosure are also applicable to a structure in which communication between an access network device, a core network device, or a network device and a terminal is replaced by communication between a plurality of terminals (e.g., device-to-device (D2D), vehicle-to-everything (V2X)). In such a case, a structure may also be configured such that a terminal has all or part of the functions of an access network device. In addition, terms such as "uplink" and "downlink" may be replaced with terms corresponding to inter-terminal communication (e.g., "sidelink"). For example, an uplink channel or a downlink channel may be replaced with a sidelink channel; and an uplink or a downlink may be replaced with a sidelink.

In some embodiments, a terminal may be replaced with an access network device, a core network device, or a network device. In such a case, a structure may also be configured such that the access network device, core network device, or network device has all or part of the functions of a terminal.

In some embodiments, the fetching of data, information, and the like may comply with the laws and regulations of the country where the location is situated.

In some embodiments, data, information, and the like may be fetched with the user's consent.

Furthermore, each element, each row, or each column in the table of some embodiments of the present disclosure may be implemented as an independent embodiment, and any combination of any element, any row, or any column may also be implemented as an independent embodiment.

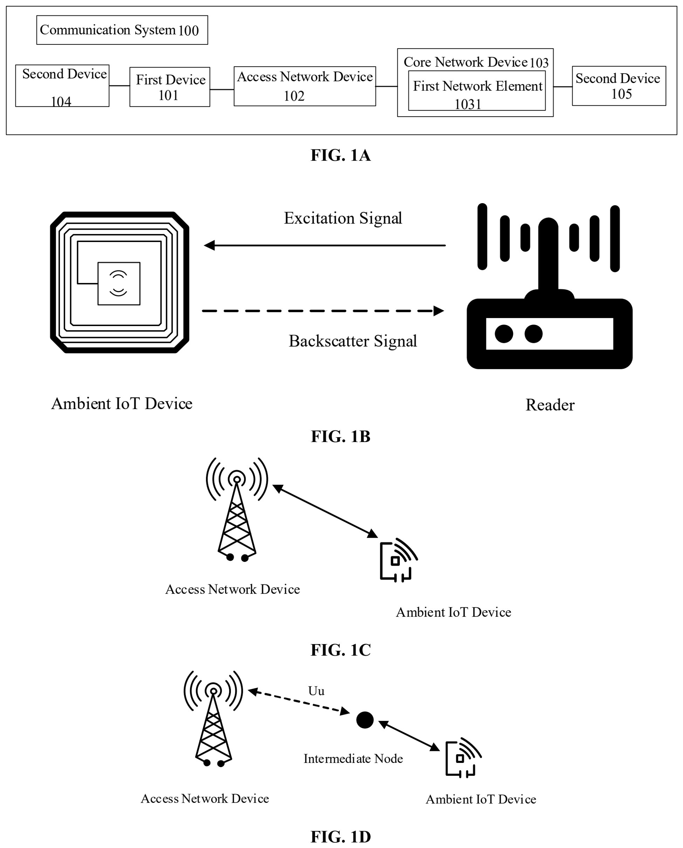

FIG. 1A is a schematic architectural diagram of a communication system according to an embodiment of the present disclosure.

As shown in FIG. 1A, the communication system 100 includes a terminal 101, an access network device 102, a core network device 103, a second device 104, and a second device 105.

In some embodiments, when the first device 101 is a terminal, the terminal may include at least one of the following: mobile phone, wearable device, internet of things device, car with communication function, smart car, pad, computer with wireless transceiver function, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home, which is not limited here.

In some embodiments, the terminal is also referred to as user equipment (UE).

In some embodiments, the access network device 102 may be, for example, a node or device that connects a terminal to a wireless network. The access network device may include at least one of the following: an evolved node B (eNB) in a 5G communication system, a next generation eNB (ng-eNB), a next generation node B (gNB), a node B (NB), a home node B (HNB), a home evolved node B (HeNB), a radio backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication systems, and an access node in a Wi-Fi system, which is not limited here.

In some embodiments, the technical solutions of the present disclosure may be applied to the Open RAN architecture. The interfaces between or within access network devices involved in the embodiments of the present disclosure may be understood as internal interfaces of Open RAN. The processes and information interactions between these internal interfaces may be implemented by software or programs.

In some embodiments, the access network device may be composed of a central unit (CU) and a distributed unit (DU), where the CU may also be called a control unit. The CU-DU structure may separate the protocol layer of the access network device, with some of the protocol layer functions being centrally controlled by the CU, while the remaining part or all of the protocol layer functions being distributed in the DUs that are centrally controlled by the CU, which is not limited here.

In some embodiments, the core network device 103 may be one device including a first network element 1031 and the like, or may be multiple devices or device groups each including a first network element 1031. A network element may be virtual or physical. The core network includes, for example, at least one of an evolved packet core (EPC), a 5G core network (5GCN), and a next generation core (NGC).

In some embodiments, the first network element 1031 is, for example, an access and mobility management function (AMF).

In some embodiments, the first network element 1031 is, for example, a mobility management entity (MME).

In some embodiments, the first network element 1031 is configured to perform access and mobility management, such as registration management, connection management, and mobility management. Its name is not limited to those described herein.

In some embodiments, the first network element 1031 may be an independent network element separate from the core network device.

In some embodiments, the core network may also include a second network element, which may include user data management (UDM) and the like.

It can be understood that the communication systems described in some embodiments of the present disclosure are for the purpose of more clearly illustrating the technical solutions of the embodiments of the present disclosure, which do not constitute limitations on the technical solutions proposed in some embodiments of the present disclosure. As those skilled in the art may know, with the evolution of system architecture and the emergence of new service scenarios, the technical solutions proposed in some embodiments of the present disclosure are also applicable to similar technical problems.

The following embodiments of the present disclosure may be applied to the communication system 100 or a part of its entities as shown in FIG. 1A, but are not limited thereto. The entities illustrated in FIG. 1A are exemplary. The communication system may include all or part of the entities in FIG. 1A, or may include other entities beyond those in FIG. 1A. The number and form of the entities may be arbitrary. Each entity may be physical or virtual. The connection relationships between the entities are illustrative; the entities may or may not be connected, and the connection may be in any way, including direct or indirect connection, wired or wireless connection.

Each embodiment of the present disclosure may be applied to long term evolution (LTE), LTE-advanced (LTE-A), LTE-beyond (LTE-B), SUPER 3G, IMT-advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, and ultra-wideband band (UWB), bluetooth (registered trademark), public land mobile network (PLMN) networks, Device-to-Device (D2D) system, Machine to Machine (M2M) system, Internet of Things (IoT) system, Vehicle-to-Everything (V2X) system, systems utilizing other communication methods, and/or next-generation systems built upon them. Furthermore, each embodiment of the present disclosure may be applied to a combination of multiple systems (e.g., a combination of LTE or LTE-A with 5G and the like).

In some cases, IoT device is typically powered by conventional battery with limited lifespan, which negatively impacts the user experience. The number of IoT network devices is gradually growing at an astronomical rate, and coupled with the proliferation of massive numbers of IoT devices, this pushes operational expenditures including labor and battery costs to an entirely new level. Billions of conventional batteries are discarded every year, only a small fraction of which can be effectively recycled, thereby causing detrimental effects on the Earth's ecosystem. Under certain extreme environmental conditions, maintaining the operation of IoT networks and replacing batteries can be highly challenging. In this context, battery-free IoT communication has been proposed, which can enhance network performance and sustainability while also expanding the range of application scenarios. Moreover, battery-free communication is more environmentally friendly and safer for children and elderly individuals. By eliminating conventional batteries, device size and cost can be significantly reduced, thereby paving the way for various new applications.

In some embodiments, various low power wide area (LPWA) technologies have been developed, such as machine type communication (MTC), narrowband internet of things (NB-IoT), and reduced capability (RedCap), to meet the growing demands of vertical sectors. These LPWA technologies achieve low cost, low power consumption, and massive connectivity, thereby satisfying the requirements of many applications. However, numerous use cases and applications remain unaddressed under the following circumstances. First, battery-powered devices are unsuitable, for example, in extreme environmental conditions (e.g., high voltage, extremely high/low temperatures, or humid environments). Second, maintenance-free devices are required (e.g., devices that do not require battery replacement). Finally, there is a need for ultra-low complexity, very small device size/form factor (e.g., millimeter-scale thickness), and a longer lifecycle. Ambient-powered IoT is a promising technology that can address these unmet needs. An ambient-powered IoT device is an IoT device powered by energy harvesting, having no battery or limited energy storage capacity (e.g., using a capacitor), which provides energy by harvesting radio waves, light, motion, heat, or any other suitable power source.

Energy harvested from the environment can drive data transmission and wireless communication for sensing nodes. Currently, mainstream low-power IoT communication chips (e.g., BLE, LoRa, NB-IoT) have transceiver power consumption at the level of tens to hundreds of milliwatts, whereas energy fetched through environmental energy harvesting is only at the microwatt level, which is insufficient to drive such nodes. Therefore, novel wireless communication technologies are required to reduce communication energy consumption to tens of microwatts or even below ten microwatts. The current mainstream approach employs backscatter communication technology. Backscatter communication is one of the key technologies for building a green, energy-efficient, low-cost, and flexibly deployable future IoT, and serves as a crucial means to achieve the "intelligent interconnection of everything." Backscatter transmission technique is one of available manners.

As shown in FIG. 1A, the second device 104 may be any device that performs wireless communication based on a backscatter transmission mechanism.

As shown in FIG. 1B, the backscatter transmission mechanism may be described as a wireless communication mechanism that leverages the principle of radio frequency (RF) signal backscattering, utilizing extremely low-power modulation and transmission technologies. A reader transmits a physical-layer signal to an ambient IoT device. This physical-layer signal may be various types of alternating current (AC) signals, such as a pulse signal. In some embodiments, this physical-layer signal is used to provide the energy for the ambient IoT device to transmit a signal. Therefore, this physical-layer signal may be referred to as an excitation signal or a trigger signal. By way of example, when the excitation signal reaches the ambient IoT device, a portion of it is reflected. The ambient IoT device can adjust the matching between its receiving antenna and impedance according to the information it intends to send, thereby enhancing the reflection of the incident excitation signal. It then modulates the sensing data it has fetched onto this reflected signal, accomplishing the transmission of data. This process is analogous to a mirror reflector. Compared to other communication technologies, backscatter transmission eliminates the need for complex RF structures, reducing or omitting components such as power amplifiers, high-precision crystal oscillators, duplexers, and high-precision filters, and also avoids complex baseband processing. Consequently, it can simplify the design of ambient IoT devices and substantially reduce the cost of ambient IoT device nodes. An ambient IoT device is an IoT device that operates using ambient energy. This ambient energy may include the signal energy from the aforementioned wireless signals, and may also include other ambient energy sources such as geothermal and/or optical energy.

Herein, the device that sends the physical-layer signal to the ambient IoT device and thereby triggers the ambient IoT device to return a reflected signal may be referred to as an anchor point, or a reader, of the ambient IoT device.

It should be noted that an ambient IoT device is one type of device that employs the backscatter transmission mechanism for wireless communication. In practice, other types of devices may also utilize the backscatter transmission mechanism for wireless communication.

The anchor point, or reader, of the ambient IoT device may be a network node of a wireless communication network, such as an access network device, a relay node (also referred to as an intermediate node), a terminal, and the like.

A network topology of backscatter transmission may include one of the followings.

In topology 1, as shown in FIG. 1C, the ambient IoT device and the access network device directly perform uplink (UL) data transmission and downlink (DL) data transmission between them.

In topology 2, as shown in FIG. 1D, data transmission between an ambient IoT device and an access network device is indirectly performed for DL and UL. An intermediate node (also referred to as an auxiliary node) exists therebetween to perform forwarding. For example, the intermediate node may be a relay, an integrated access backhaul (IAB) node, a user equipment (UE), or a repeater (RP).

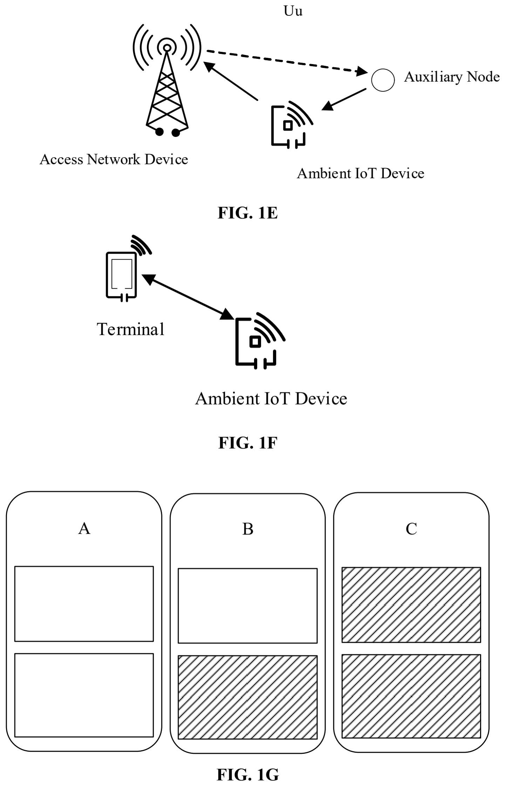

In topology 3, as shown in FIG. 1E, an ambient IoT device and an access network device directly perform data reception or transmission on the DL or UL. An auxiliary node is present on the UL or DL, responsible for receiving or transmitting data on the respective link. For example, the auxiliary node may be a relay, an integrated access and backhaul (IAB) node, a terminal, or a network-controlled repeater (NCR).

In topology 4, as shown in FIG. 1F, an ambient IoT device and a UE directly perform the reception and transmission of both DL and UL data. The UE is responsible for collecting the data and forwarding it to the network side.

As shown in FIG. 1G, devices that perform wireless communication using a backscatter transmission mechanism can be categorized into three types:
device A: it has no energy storage, cannot independently generate and/or amplify a signal, and can only perform backscatter transmission.
device B: it has energy storage, cannot independently generate a signal, and can only perform backscatter transmission. The use of the stored energy may include amplification of the backscatter signal.
device C: it has energy storage, can independently generate a signal, i.e., possesses active Radio Frequency (RF) components for transmission.

In some embodiments of the present disclosure, given the vast number of terminals and considerations of coverage, a terminal may also be selected as the anchor point or reader for devices that communicate using the backscatter principle.

Some embodiments of the present disclosure relate to a communication method used for a communication system. The method includes performing enhanced transmission between a first device and a second device.

Enhanced transmission can improve the reliability of transmission between the first device and second device.

The communication system includes the first device and the second device.

The first device here may include, but is not limited to: terminal, access network equipment, auxiliary node, relay equipment and/or IAB and the like.

The second device may be any device that performs wireless communication based on backscatter transmission, such as the environmental IoT device shown in FIG. 1G.

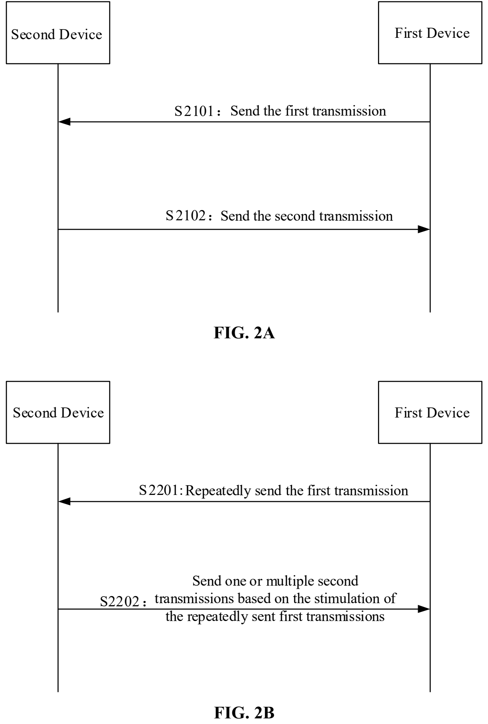

FIG. 2A is an interactive schematic diagram of a communication method according to an embodiment of the present disclosure. As shown in FIG. 2A, the communication method provided in the embodiments is performed by a communication system and may include the followings.

In step S2101, the first transmission is sent.

In some embodiments, the first transmission may include a pure excitation signal and/or a downlink transmission that is modulated and encoded to carry information. The excitation signal is used for providing at least part of the energy for the second device to transmit the second transmission.

In some embodiments, the first transmission is a wireless transmission, which can provide energy for the second device to perform the second transmission.

In some embodiments, the first transmission may serve as the exciting transmission for the second transmission performed by the second device.

In some embodiments, the first transmission may be used for enhancing the transmission reliability between the first device and the second device.

In some embodiments, the first transmission may include a first signal, which may be referred to as an excitation signal, specifically designed to stimulate the wireless transmission of the second device.

In other embodiments, the first transmission may carry first information. Accordingly, the first transmission not only stimulates the wireless transmission performed by the second device, but also transmits the first information to the second device.

In some embodiments, the first transmission may carry first information. The first information indicates that the first device has a first task. For example, the first transmission may indicate that the first device is configured with a first task. For another example, the first transmission may directly or indirectly indicate that the first device has a first task.

The first task may be a task for the first device to act as a reader for the second device, to read information from the first device. This first task may be referred to as a collection task or the like. The reader may also be referred to as an anchor point.

When the first device is a terminal, the terminal may be in a non-connected or connected state.

The non-connected state includes an idle state and/or an inactive state.

In some embodiments, the first transmission includes one or more bits that explicitly indicate that the first device is configured with the first task.

In other embodiments, the first transmission includes one or more bits that implicitly indicate that the first device is configured with the first task. The bits that implicitly indicate the first task are also reused to indicate other information.

In some embodiments, the first information that implicitly indicates the first task may include, but is not limited to:
a task identity of the first task;
a device identity of the first device acting as the reader, where the reader is used for sending a first signal to the first device and receiving the second transmission sent by the first device triggered based on the first signal;
a device identity of the second device.

For example, the task identity may be generated based on the network device that distributes the first task. The network device may include a core network device and/or an access network device. The task identity may include an access network device identity and/or a cell identity. The access network device identity contained in the task identity indicates the access network device that distributed the first task. The cell identity contained in the task identity is the cell that distributed the first task.

For another example, the task identity of the first task may be determined by a third device. The third device may be an application server or an application function, which is the target device that needs to read the second transmission from the second device.

In some embodiments, the device identity of the reader includes at least a first part and/or a second part.

The first part includes at least one of the followings:
an access network device identity, indicating the access network device that issued the first task;
a cell identity, indicating the cell that issued the first task.

The second part includes:
a sequence code, indicating an order of the first device as the reader;
a random number;
a type code of the terminal;
a task identity of the first task;
a service code of the first task.

The device identity of the first device acting as the reader of the second device, as described here, is different from the temporary identity used when the first device connects to a network.

The first task may be related to the first device transmitting the first transmission and collecting the second transmission.

In some embodiments, the first task has task information, which may include at least one of the followings:
task identity;
task description;
device identity of the second device;
device identity of the first device acting as the reader;
service code of the first task;
device type of the first device involved in the first task;
resource information, where the resource information indicates resources, sessions, or network slices, and the like of the second transmission reported by the first device; task identity, indicating the task to be executed, which may be related to the reporting of the second transmission of the second device.

The task description may indicate the service type associated with the task to be executed, service identity associated with the task to be executed, data type and/or data volume of the second transmission to be uploaded by the first device, and the like.

Wireless configuration is configured to the terminal, auxiliary node, or relay node of the first device to wirelessly send the second transmission.

In some embodiments, the task description may further include:
area information on where the task to be executed. The area information may include, but is not limited to, a cell identity, a base station identity, and/or a tracking area (TA) identity, and the like.

In other embodiments, the task information may further include:
device information of the second device that is to execute the task corresponding to the task identity. For example, the device information may indicate the type of the device, functions supported by the device.

Wireless configuration may indicate configuration of wirelessly sending the first transmission and receiving the second transmission. For example, the configuration information may relate to radio resource configuration, power configuration, and/or transmission mode configuration, and the like.

Delay-sensitive information indicates whether it is delay-sensitive on the second transmission sent by the second device. If the second transmission is delay-sensitive information, it is sent promptly after the second device receive the first transmission of the first device. If the second transmission is not delay-sensitive information, the second device may temporarily buffer the second transmission and send it at a suitable sending occasion.

In step S2102, the second transmission is sent.

In some embodiments, the second device sends the second transmission in response to the stimulation of the first transmission.

In some embodiments, the second device sends a single second transmission in response to one or more stimulations of the first transmission.

In other embodiments, the second device sends multiple second transmissions in response to one or more stimulations of the first transmission.

In some embodiments, the second transmission may include second information. The second information may include, but is not limited to, data and/or signaling.

In some embodiments, the second transmission is an enhanced transmission performed by the second device based on the first transmission.

For example, the second transmission may include: preset data of the second device and data and/or signaling written into the second device by a fourth device. For example, the fourth device may be various sensors. The preset data herein may be any data written into the second device before the second device is put into use. The fourth device may include, but is not limited to: temperature sensors, positioning sensors, and/or various industrial sensors.

For example, the preset data of the second device includes, but is not limited to, one of the followings:
a device identity of the second device;
device type information of the second device;
an identity and/or target information of a target object carrying the second device. For example, the target object carrying the second device may include objects such as express parcels. The target information may include, but is not limited to: type information of the parcel, origin of the parcel, destination of the parcel, and/or security assurance information of the parcel.

In some embodiments, although the second device itself has no power source or only has a temporarily energy-storing power supply module or a power supply module with limited capacity, the second device has storage space and, serving as an external storage device for the fourth device, can be written with data and/or signaling by the fourth device. Accordingly, even without pre-configured data, the second transmission within the second device is dynamically updated.

The second transmission may be a transmission returned to the first device based on a backscatter transmission mechanism.

The second transmission may be carried by the reflected signal shown in FIG. 1B.

In the embodiments of the present disclosure, enhanced transmission is performed between the first device and the second device, thereby ensuring the reliability of transmission between the first device and the second device, and in particular improving the reliability of the second transmission sent by the second device to the first device.

FIG. 2B is an interaction schematic diagram of a communication method according to an embodiment of the present disclosure. As shown in FIG. 2B, this embodiment of the present disclosure relates to a communication method used for a communication system 100. The method includes the followings.

In step S2201, the first device 2 repeatedly sends the first transmission.

The related definitions of the first device, the second device, the first transmission, and the second transmission herein may be referred to the embodiment shown in FIG. 2A.

For example, the first transmission includes first information. The second transmission includes second information.

In some embodiments, a single sending of the first transmission is used for triggering a single sending of the second transmission of the second device.

In some embodiments, the repeatedly performed first transmissions may be completely identical. For example, the first transmission may be an excitation signal (or a triggering signal); in this case, the repeated first transmissions may be completely identical.

In other embodiments, the repeated first transmissions are not entirely identical. For example, the first transmission carries first information, and the first information is the same in any two of the repeated first transmissions.

In some embodiments, the first transmission further includes a first indication. The first indication may differ among the repeated first transmissions.

The first indication may be used for determining, by the second device, the remaining number of repetition (or the remaining number of triggering, the remaining number of stimulation) of the first transmission in this round of communication.

In some embodiments, the first indication indicates at least one of the followings:
a total number of triggering of the first device;
a current number of triggering of the first device;
a remaining number of triggering of the first device;
a last triggering of the first device.

In some embodiments, the total number of triggering of the first device can be carried in any one of the first transmissions, so that the second device can determine the remaining number of triggering based on the current number of triggering.

In some embodiments, each or some of the first transmissions sent by the first device may carry the current number of triggering, so that, in the case that the first device and the second device have a configured or protocol-agreed total number of triggering, the remaining number of triggering can be determined based on the current number of triggering.

In some embodiments, each or some of the first transmissions sent by the first device carries the remaining number of triggering, so that the first device can directly determine the current remaining number of triggering based on the first indication carried in the first transmission.

For example, assuming the total number of triggering is X, the first indication may be carried in every first transmission, or in the odd-numbered or even-numbered first transmissions.

In other embodiments, the first device, upon determining to perform repeated triggering, may send a first indication with an end marker in the last first transmission. Thus, after receiving the first transmission and fetching the end marker, the second device knows that the current transmission is the last one of this communication round.

The above are merely examples of the first indication. In specific implementations, the first indication may also include at least one of the followings:
a maximum number of triggering supported by the first device in one round of wireless communication;
a total number of triggering, available for selection by the second device, that the first device can provide in one round of wireless communication.

For example, the first indication carried in the first transmission sent for the first time by the first device indicates the total number of triggering of the first transmission. Alternatively,
the first indication carried in the last transmission sent by the first device indicates that the first transmission sent this time is used for the last triggering.

By carrying the corresponding first indication only in the first time or last time transmission, the first indication can be omitted in the other transmissions at other times, thereby reducing demodulation and decoding at the second device and saving power consumption required for decoding.

In step S2202, the second device sends single or multiple second transmissions to the first device based on the stimulation of the repeated first transmissions.

In one embodiment, the second device sends a single second transmission to the first device based on the stimulation of multiple repeated first transmissions. In this case, the transmission power of the second transmission is greater because the second device utilizes the energy from the multiple repeated first transmissions.

In another embodiment, the second device sends multiple second transmissions to the second device based on the stimulation of multiple repeated first transmissions. For example, upon receiving one first transmission, the second device returns one second transmission to the first device. Accordingly, the second device can repeatedly send multiple second transmissions to the first device, enabling the first device to obtain transmission gain based on the multiple second transmissions.

In some embodiments, the second transmission is an enhanced transmission performed by the second device based on the first transmission.

In some embodiments, the second transmission includes a second indication.

The second indication is used for informing the first device of the current triggering status of the second device, which may be indicated by triggered information.

The triggered information may also be referred to as stimulation information.

In some embodiments, the second indication indicates at least one of the followings:
an expected total number of times of being triggered;
a current number of times of being triggered;
an expected remaining number of times of being triggered;
an expected last time of being triggered.

For example, after receiving the first transmission for the first time, the first device knows the total number of triggering for this round of transmission. Accordingly, the second device may inform the first device, in any one of the second transmissions, of its own expected total number of times of being triggered in this round of communication.

In some embodiments, the second indication may be sent by the second device when the first transmission does not carry a first indication.

In other embodiments, the second indication may be sent by the second device when the first transmission carries a first indication.

In some embodiments, the first transmission carries the first indication. The expected total number of triggering corresponding to the second indication can be selected from the total number of triggering supported by the first device, as indicated in the first indication.

In other embodiments, if the first transmission does not carry a first indication, the second device may inform, via the second indication, the first device of its own expected total number of times of being triggered, or indicate that it expects the last triggering to be the expected last one.

When the second device repeatedly sends the second transmission in one round of communication, it may carry, in some or all of the second transmissions, a second indication indicating the current number of times of being triggered.

In some embodiments, the second indication carried in the first one of the second transmissions sent by the second device indicates the total number of times of being triggered expected by the second device; and/or, the second indication carried in the last one of the second transmissions sent by the second device indicates that the triggering corresponding to the second transmission sent this time is the last time of being triggered expected by the second device.

If the second device is ready to send, to the first device, an indication of the expected total number of times of being triggered, it may carry this indication in the second transmission that is returned to the first device for the first time in this round of communication.

If the second device itself considers that its data has been fully transmitted and repeatedly transmitted multiple times, and does not expect to continue transmission, it may also carry, in the last second transmission, an indication that the previous triggering was the expected last one.

In some embodiments, as for second transmissions that do not carry a second indication, the multiple repeated second transmissions may be completely identical.

In some embodiments, for example, if the second indication indicates, to the first device, the expected total number of times of being triggered, then the multiple repeated second transmissions may be completely identical.

In other embodiments, for example, if the second indication indicates, to the first device, the current number of times of being detected by the second device, then the second information in the multiple repeated second transmissions is the same, but the second indications differ. In other words, the multiple repeated second transmissions are partially identical.

In some embodiments, when the second transmission includes a second indication, the first one of received second transmissions may carry the expected total number of times of being triggered; and/or, the last one of received second transmissions may carry a second indication indicating the expected last time of being triggered.

In some embodiments, when the second transmission includes a second indication, a second indication indicating the current number of times of being triggered may be carried in some or all of the second transmissions.

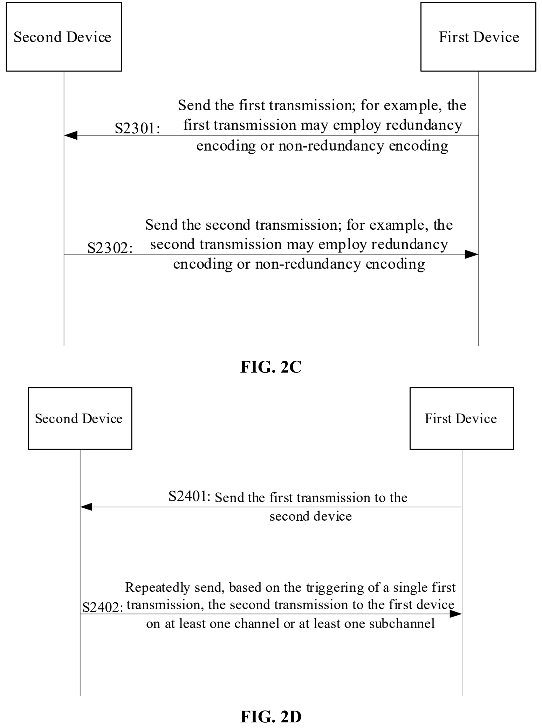

FIG. 2C is an interaction schematic diagram of a communication method according to an embodiment of the present disclosure. As shown in FIG. 2C, this embodiment of the present disclosure relates to a communication method used for a communication system 100. The method includes the followings.

In step S2301, the first device sends a first transmission to the second device. The first transmission may be processed by redundancy encoding or non-redundancy encoding. Non-redundancy encoding here refers to encoding schemes other than redundancy encoding.

The related definitions of the first device, the second device, the first transmission, and the second transmission herein may be referred to the embodiment shown in FIG. 2A.

For example, the first transmission includes first information. The second transmission includes second information.

Redundancy encoding is that a first bit encodes the information of a second bit. The second bit is the originally required bit. The number of first bits is greater than the number of second bits.

According to the first transmission processed by redundancy encoding, errors occurring during transmission may happen on a redundancy bit, allowing the receiving end to still decode correctly, thereby improving transmission reliability.

The first device sends the first transmission processed by redundancy encoding from to the second device, thereby improving at least the reliability of transmission from the first device to the second device.

In some embodiments, the first transmission processed by redundancy encoding herein may include, but is not limited to, at least one of the followings:
the first transmission processed by redundancy encoding of the RRC layer;
the first transmission processed by redundancy encoding of the MAC layer;
the first transmission processed by redundancy encoding of the physical layer.

In step S2302, the second device sends the second transmission to the first device.

In some embodiments, the second transmission may be processed by non-redundancy encoding or redundancy encoding. If the second transmission is processed by non-redundancy encoding, then the second transmission is not processed by redundancy encoding.

In some embodiments, the first device sends the first transmission through redundancy encoding, so that the second device, under the high-energy stimulation of the received first transmission with increased information length, can transmit the second transmission without being processed by redundancy encoding at a higher transmit power, thereby improving the reliability of the second transmission received by the first device.

In other embodiments, the first device sends the first transmission through redundancy encoding, and the second device also employs redundancy encoding for the second transmission. Accordingly, the first device also receives the second transmission processed by redundancy encoding.

In other embodiments, the first device sends the first transmission without redundancy encoding, but the second device sends the second transmission processed by redundancy encoding to the first device.

In some embodiments, the redundancy-encoded second transmission herein may include, but is not limited to, at least one of the followings:
the second transmission processed by redundancy encoding of the RRC layer;
the second transmission processed by redundancy encoding of the MAC layer;
the second transmission processed by redundancy encoding of the physical layer.

In some embodiments, the redundancy encoding may be implemented in various manners. Two optional manners are provided as follows:
repetition coding, where, for the repetition coding, one bit to be encoded is repetition-coded into N identical bits, where N is a positive integer greater than or equal to 2; or,
mapping coding, where, for the mapping coding, one bit is mapped to a bit sequence including M bits; where M is a positive integer greater than or equal to 2, and the M bits of the bit sequence have identical or different bit values.

For example, the bit value of one bit to be encoded is "1". The one bit may be processed by repetition coding into multiple bits with the bit value "1".

For another example, the bit value of one bit to be encoded is "0". The one bit may be processed by repetition coding into multiple bits with the bit value "0".

For example, N may be 2, 3, or 4. In specific implementations, the value of N is preferably an even number.

In other embodiments, the value of N may be 4, 8, 16, or the like.

In other embodiments, mapping coding may involve mapping "0" and "1" to a "01" sequence.

For example, the reliability of uplink transmission can be improved through the redundancy encoding.

For example, in one embodiment, at least the second transmission is processed by redundancy encoding, thereby improving the reliability of the uplink (UL) transmission from the second device to the first device.

FIG. 2D is an interaction schematic diagram of a communication method according to an embodiment of the present disclosure. As shown in FIG. 2D, this embodiment of the present disclosure relates to a communication method used for a communication system 100. The method includes the followings.

In step S2401, the first device sends the first transmission to the second device.

The related definitions of the first device, the second device, the first transmission, and the second transmission herein may be referred to the embodiment shown in FIG. 2A.

For example, the first transmission includes first information.

In step S2402, the second device repeatedly sends, based on the triggering of a single first transmission, the second transmission to the first device on at least one channel or at least one subchannel.

For example, a network device may pre-configure multiple channels or a single channel including multiple subchannels.

After receiving one first transmission, the second device receives multiple second transmissions of being repeatedly sent on multiple channels or multiple subchannels. Accordingly, the second device may receive multiple second transmissions on multiple channels or subchannels.

The second transmission here may at least include second information. The multiple second transmissions of being repeatedly sent carry identical second information.

In some embodiments, the multiple second transmissions of being repeatedly sent may include transmission sequence number. Thus, after receiving the second transmissions, the first device can determine the channel conditions of different channels or subchannels based on whether gaps exist in the sequence number of the received transmissions, thereby facilitating subsequent transmission scheduling or selection of channels/subchannels for sending the first transmission by the first device. The second device consecutively numbers the multiple second transmissions when sending them.

For example, in some embodiments, the second device may determine the channel or subchannel for sending the multiple second transmissions based on the channel used for sending the first transmission. In this case, the first device can select the channel or subchannel for sending the first transmission based on whether gaps exist in the sequence numbers among the received second transmissions.

In one embodiment, the second device may send one second transmission on each of multiple channels respectively, or send one second transmission on each of multiple subchannels respectively. Accordingly, the second transmissions repeatedly sent are transmitted on different channels or subchannels, thereby achieving better frequency diversity gain.

In other embodiments, the second device may send multiple second transmissions on some or all of multiple channels, or send multiple second transmissions on some or all of multiple subchannels. For example, the second device may select multiple subchannels with good channel quality and send at least two second transmissions on each selected subchannel respectively.

It should be noted that the second device is not limited to repeatedly sending multiple second transmissions on multiple channels or multiple subchannels; it may also include repeatedly sending multiple second transmissions on a single channel or a single subchannel.

In some embodiments, the at least one channel or the at least one subchannel is configured by a network device; or,
the at least one channel or the at least one subchannel is specified by a protocol; or,
the at least one channel or the at least one subchannel is selected by the second device.

For example, the network device may be an access network device.

In some embodiments, if the first device is an access network device, the multiple channels may be configured directly by the first device. In this case, during the initial communication with the second device, the first device sends the configuration of the multiple channels or multiple subchannels to the second device; this configuration constitutes the aforementioned first information.

In other embodiments, if the first device is a terminal, an IAB node, an auxiliary node, or a relay node, the configuration of the multiple channels or multiple subchannels may be sent from the access network device to the first device, and then forwarded by the first device to the second device.

In some embodiments, the multiple channels or multiple subchannels for repeatedly sending (or returning) the second transmission may be specified by a protocol. For example, the multiple channels or subchannels may be configured by the network device, and the protocol may specify that the multiple channels or subchannels with the smallest or largest channel indices among those configured by the network device are to be selected as the final transmission channels for the second transmission.

In some embodiments, the multiple channels or multiple subchannels may be specified by the first device or determined by the second device.

For example, the multiple channels or subchannels for repeatedly sending the second transmission may be determined based on the device identity of the first device or the device identity of the second device. For example, the device identity may be converted into a numerical value and be subjected to a modulo operation with a specified value, with the remainder being used for determining the channel or subchannel. In other words, in some embodiments, the second device may determine the at least one channel or at least one subchannel of sending the second transmission based on the device identity and a first algorithm. The at least one channel here may include one channel or multiple channels. The at least one subchannel may include multiple channels or multiple subchannels.

For example, the second device may determine the channel and/or subchannel of the second transmission based on the channel used for sending the first transmission. For example, the channel identity of the sending channel of the first transmission and a second algorithm are used for determining the multiple channels or multiple subchannels of the second transmission.

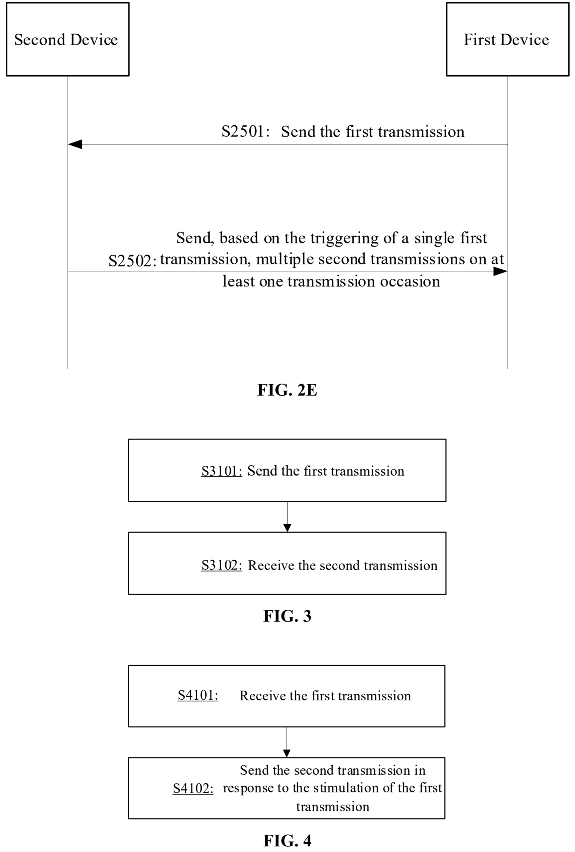

FIG. 2E is an interaction schematic diagram of a communication method according to an embodiment of the present disclosure. As shown in FIG. 2E, this embodiment of the present disclosure relates to a communication method used for a communication system 100. The method includes the followings.

In step S2501, the first device sends a first transmission to the second device.

The related definitions of the first device, the second device, the first transmission, and the second transmission herein may be referred to the embodiment shown in FIG. 2A.

For example, the first transmission includes first information.

In step S2502, the second device sends, based on the triggering of a single first transmission, multiple second transmissions on at least one transmission occasion.

In some embodiments of the present disclosure, the first device may receive multiple second transmissions from the second device at one or more transmission occasions after a single first transmission.

In some embodiments, the second device sends one second transmission at each of the selected multiple transmission occasions, or sends multiple second transmissions at each of the selected multiple transmission occasions. In other words, the second device may send at least one second transmission at the selected multiple transmission occasions.

Accordingly, the second transmission can be repeatedly sent in the time domain to obtain time-domain gain, thereby improving the reliability of the second transmission through the time-domain gain.

In some embodiments, the at least one transmission occasion is configured by a network device; or,
the at least one transmission occasion is specified by a protocol; or,
the at least one transmission occasion is selected by the second device.

In some embodiments, the network device may include an access network device and/or a core network device. The network device may send multiple transmission occasions for the second transmission sent by the second device. If the first device is an access network device, these multiple transmission occasions may be directly notified to the second device by the first device via the initial first transmission.

If the first device is not an access network device but an IAB node, an auxiliary node, a relay node, or a terminal, then the first device may receive the configuration of the multiple transmission occasions from the network device and forward it to the second device.

In other embodiments, the first device may be a terminal, an IAB node, an auxiliary node, or a relay node. In this case, the configuration of the multiple transmission occasions may be sent from the access network device to the first device, and then sent from the first device to the second device.

In some embodiments, the multiple transmission occasions of repeatedly sending (or returning) the second transmission may be specified by the protocol. For example, the multiple transmission occasions may be configured by the network device, and the protocol may specify that the earliest or latest transmission occasions among those configured are to be selected as the final transmission occasions for the second transmission.

In some embodiments, the multiple transmission occasions may be specified by the first device or determined by the second device.

For example, the multiple channels or subchannels for repeatedly sending the second transmission may be determined based on the device identity of the first device or the device identity of the second device. For example, the device identity may be converted into a numerical value and be subjected to a modulo operation with a specified value, with the remainder being used for determining multiple transmission occasions. In other words, in some embodiments, the second device may determine the at least one transmission occasion of sending the second transmission based on the device identity and a third algorithm. The at least one transmission occasion here may include one transmission occasion or multiple transmission occasions.

For example, the second device may determine the transmission occasion of the second transmission based on the transmission occasion of the first transmission. For example, the multiple transmission occasions of the second transmission may be determined based on the identity of time-domain resource of the transmission occasion of the first transmission and a fourth algorithm.

In some embodiments, after receiving a single first transmission, the second device sends multiple second transmissions on multiple channels or at multiple transmission occasions based on the single first transmission.

In other embodiments, after receiving a single first transmission, the second device sends multiple second transmissions through at least one transmission occasion and on at least one channel based on the single first transmission. Here, "at least one transmission occasion" can be understood as multiple transmission occasions, and "at least one channel" can be understood as multiple channels.

In other embodiments, after receiving a single first transmission, the second device sends multiple second transmissions through at least one transmission occasion and on at least one subchannel based on the single first transmission. Here, "at least one transmission occasion" can be understood as multiple transmission occasions.

It should be noted that the at least one transmission occasion may be selected based on the device identity of the second device, a task identity associated with the second transmission, and/or the device identity of the first device.

As shown in FIG. 3, an embodiment of the present disclosure provides a communication method performed by a first device. The method includes the followings.

In step S3101, a first transmission is sent.

In some embodiments, the first transmission is sent to the second device.

In some embodiments, the first transmission is used for stimulating an enhanced transmission between the second device and the first device.

In some embodiments, the first transmission is used for stimulating the second transmission sent by the second device.

The relevant descriptions of the first device, the second device, the first transmission, and the second transmission herein may be referred to the embodiment shown in FIG. 2A, and are not repeated here.

For specific execution of S3101, reference may be made to the corresponding embodiments in FIG. 2A, FIG. 2B, FIG. 2C, and FIG. 2D.

For example, sending the first transmission to the second device may include at least one of the followings.

The first transmission is repeatedly sent to the second device.

The first transmission processed by redundancy encoding is sent to the second device.

In some embodiments, the first transmission of being repeatedly sent may include a first indication. It should be noted that the first transmission carrying a first indication is an optional step.

In some embodiments, the first indication is used for determining, by the second device, the remaining number of triggering of the first transmission.

In some embodiments, the first indication indicates at least one of the followings:
a total number of triggering of the first device;
a current number of triggering of the first device;
a remaining number of triggering of the first device;
a last triggering of the first device.

In some embodiments, the first indication carried in the first transmission sent for the first time by the first device indicates the total number of triggering;
or,
the first indication carried in the last transmission sent by the first device indicates the last triggering.

The redundancy encoding herein may include at least one of the followings:
repetition coding, where, for the repetition coding, one bit to be encoded is repetition-coded into N identical bits, where N is a positive integer greater than or equal to 2; or,
mapping coding, where, for the mapping coding, one bit is mapped to a bit sequence including M bits; where M is a positive integer greater than or equal to 2, and the M bits of the bit sequence have identical or different bit values.

In step S3102, a second transmission is received.

In some embodiments, the second transmission sent by the second device is received.

In some embodiments, the second transmission, sent by the second device in response to the stimulation of the first transmission, is received.

In some embodiments, receiving the second transmission sent by the second device includes at least one of the followings.

Multiple second transmissions repeatedly sent by the second device are received.

Second transmission processed by redundancy encoding sent by the second device is received.

Multiple second transmissions, that are repeatedly sent by the second device, are received based on a single first transmission, on at least one channel or at least one subchannel.

Multiple second transmissions that are sent by the second device, are received based on a single first transmission, on at least one transmission occasion.

For specific implementations of repeatedly sending the second transmission, redundancy encoding the second transmission, and sending the second transmission on at least one channel or at least one transmission occasion, reference may be made to the schemes shown in FIG. 2A, FIG. 2B, FIG. 2C, and FIG. 2D.

In some embodiments, the second transmission of being repeatedly sent (or repeatedly returned) includes a second indication, indicating information of being triggered of the second device.

It should be noted that the second transmission of being repeatedly sent carrying a second indication is an optional step.

It can be understood that the second indication indicates at least one of the followings:
an expected total number of times of being triggered;
a current number of times of being triggered;
an expected remaining number of times of being triggered.

It can be understood that the second indication carried in the first second transmission received by the first device is used to indicate the expected total number of times of being triggered by the second device;
and/or,
the second indication carried in the last second transmission sent by the second device indicates the last time of being triggered expected by the second device.

As shown in FIG. 4, an embodiment of the present disclosure provides a communication method, performed by a second device. The method includes the followings.

In step S4101, a first transmission is received.

In some embodiments, the second device receives a first transmission sent by a first device.

In some embodiments, the S4101 may include, but is not limited to, at least one of the followings.

The first transmission of being repeatedly sent by the first device is received.

The first transmission processed by redundancy encoding and sent by the first device is received.

The redundancy encoding herein may include the aforementioned repetition coding and/or mapping coding.

The specific details of the repetition coding and/or mapping coding may be referred to the foregoing embodiments.

In some embodiments, the relevant description of the second device and the first transmission may be referred to the embodiment shown in FIG. 2A.

In step S4102, a second transmission is sent in response to the stimulation of the first transmission.

In some embodiments, one or more second transmissions are sent to the first device in response to the stimulation of the first transmission.

In some embodiments, the second device may be as described in the related description of the embodiment shown in FIG. 2A.

In some embodiments, the S4102 may include, but is not limited to, at least one of the followings.

The second transmission is repeatedly sent in response to the stimulation of the first transmission. For example, one second transmission is sent upon receipt of one first transmission.

The second transmission processed by redundancy encoding is sent in response to the stimulation of the first transmission. For example, the redundancy encoding herein may include, but is not limited to, the aforementioned repetition coding and/or mapping coding.

In response to the triggering of a single first transmission, the second transmission is repeatedly sent on multiple channels or multiple subchannels to the first device.

In response to the triggering of a single first transmission, the second transmission is repeatedly sent at multiple transmission occasions to the first device.

In long term evolution (LTE) or new radio (NR), many methods ensuring data transmission reliability exist, such as hybrid automatic repeat request (HARQ) feedback, redundancy encoding, repeated transmission, radio link control acknowledgment mode (RLC AM) higher-layer retransmission.

A backscatter-based device, such as ambient IoT device, has simple construction. Therefore, the aforementioned methods for ensuring transmission reliability are too complex to be applied. For example, ambient IoT devices may not support RLC AM or HARQ during data transmission. In view of this, the embodiments of the present disclosure aim to improve data transmission and reception reliability in passive IoT communication, specifically in communication based on backscatter or autonomously generated signals.

In solution 1, repeated triggering leads to repeated transmission, thereby improving uplink (UL) transmission reliability.

In option 1, repeated triggering is performed based on network controlling. The base station notifies in the first trigger signal that n repeated triggering for reporting exist in this data triggering round, for the purpose of reliability.

The network side can indicate the total number of repeated triggering and/or the current number of repetitions. Alternatively, the network side can indicate the remaining number of repeated triggering.

In option 2, repeated triggering is performed based on the request of UE. The UE indicates in the first backscatter communication that it expects m repeated triggering for reliability. Based on the data reception status, the base station can indicate, in the last repeated triggering, that it is the last triggering, or end the backscatter communication (i.e., the current excitation signal is not to trigger backscatter), indicating that the base station has received the data.

For both option 1 and option 2, the UL transmission sent by the ambient IoT device includes an indication message. Backscatter transmissions with the same indication message belong to the same data packet. This indication message can be the aforementioned second indication.

In solution 2, redundancy encoding improves UL transmission reliability.

Redundancy repetition, i.e., redundancy encoding is performed on a data stream to be transmitted at the MAC layer, RRC layer, or PHY layer. The base station indicates, in the excitation signal, the number of redundancy repetition to be performed by the ambient IoT device. The number of redundancy repetition may be system-fixed or protocol-fixed. For example, original 4-bit data become 16-bit data after redundancy encoding, repeated 4 times.

In solution 3, mapping coding improves UL transmission reliability.

Encoding is performed on a data stream to be transmitted at the MAC layer, RRC layer, or PHY layer. For example, a "0" in the data stream is encoded as "0101", and a "1" is encoded as "1010". The encodings corresponding to "0" and "1" may be protocol-fixed. Alternatively, the protocol may define a table representing possible mapping tables for the encodings corresponding to "0" and/or "1". The base station indicates, in the trigger excitation signal, which possibility (or table entry) to select.

In solution 4, multi-channel selection in the frequency domain achieves repeated transmission, thereby improving UL transmission reliability.

During UL transmission, the ambient IoT device selects at least one subchannel for repeated transmission. The selected multiple frequency-domain subchannels may be based on network-side configuration, autonomous selection by the ambient IoT device, or protocol definition (e.g., calculated according to a protocol-defined formula based on the device identity of the ambient IoT device). Alternatively, one subchannel is based on network-side configuration, while other subchannels for repeated transmission are autonomously selected by the ambient IoT device. If there are subchannels autonomously selected by the ambient IoT device for repeated transmission, the ambient IoT device indicates in the data transmission either all subchannels selected by the network side or all subchannels other than the current subchannel.

In solution 5, multi-transmission-occasion selection in the time domain achieves repeated transmission, thereby improving UL transmission reliability.

During UL transmission, the ambient IoT device selects at least one transmission occasion in the time domain for repeated transmission. The selected multiple transmission occasions may be based on network-side configuration, autonomous selection by the ambient IoT device, or protocol definition (e.g., calculated according to a protocol-defined formula based on the device identity of the ambient IoT device). Alternatively, one transmission occasion is based on network-side configuration, while other transmission occasions for repeated transmission are autonomously selected by the ambient IoT device. If transmission occasions autonomously selected by the ambient IoT device for repeated transmission exist, the ambient IoT device indicates in the data transmission either all transmission occasions selected by the network side or all transmission occasions other than the current transmission occasion.

In solution 6, downlink (DL) transmission reliability is improved.

Solutions 2 and 3 can also be applied to improve DL reliability. However, the redundancy count and the encoding mapping are system-fixed, or indicated to the ambient IoT device in system messages.

Solutions 4 and 5 can also be applied to improve DL reliability. However, the subchannel selection and transmission occasion selection are system-fixed, or indicated to the ambient IoT device in system messages.

The present disclosure is directed to passive IoT communication; it improves the reliability of data transmission and reception in backscatter-based communication or in communication employing autonomously generated signals.

Some embodiments of the present disclosure also provide a communication system, which may include: a first device and a second device. The first device is configured to perform at least one of the communication methods according to any technical solution described above that is performed by the first device. The second device is configured to perform at least one of the communication methods according to any technical solution described above that is performed by the second device. The embodiments of the present disclosure also provide an apparatus for implementing any of the above methods. For example, an apparatus is provided that includes units or modules for implementing the steps performed by the terminal in any of the above methods. For another example, another apparatus is provided that includes units or modules for implementing the steps performed by a network device (e.g., an access network device or a core network device) in any of the above methods.

It should be understood that the division of units or modules in the above apparatus is merely a division of logical functions. In actual implementation, they may be fully or partially integrated into a single physical entity, or may be physically separated. Furthermore, the units or modules in the apparatus may be implemented in the form of a processor calling software: for example, the apparatus includes a processor connected to a memory storing instructions. The processor is configured to call the instructions to cause the apparatus to implement any of the above methods or to implement the functions of the units or modules in the above apparatus. The processor may be, for example, a general-purpose processor such as a central processing unit (CPU) or a microprocessor. The memory may be internal or external to the apparatus. Alternatively, the units or modules in the apparatus may be implemented in the form of hardware circuits, where the functions of some or all units/modules can be realized through the design of the hardware circuit. Such a hardware circuit can be understood as one or more processors. For example, in one implementation, the hardware circuit is an application-specific integrated circuit (ASIC), and the functions of some or all units/modules are realized through the design of logical relationships among circuit components. In another implementation, the hardware circuit may be implemented through a programmable logic device (PLD). Taking a field programmable gate array (FPGA) as an example, it may include a large number of logic gates, and the connection relationships among the logic gates are configured through configuration files, thereby realizing the functions of some or all units/modules. All units or modules of the above apparatus may be implemented entirely through processor-called software, entirely through hardware circuits, or partially through processor-called software with the remaining parts implemented through hardware circuits.

In the embodiments of the present disclosure, a processor is a circuit with signal processing capability. In one implementation, the processor may be a circuit with instruction reading and execution capabilities, such as a central processing unit (CPU), a microprocessor, a graphics processing unit (GPU) (which can be understood as a type of microprocessor), or a digital signal processor (DSP). In another implementation, the processor may realize certain functions through the logical relationships of a hardware circuit. The logical relationships of such a hardware circuit may be fixed or reconfigurable. For example, the processor may be a hardware circuit implemented using an application-specific integrated circuit (ASIC) or a programmable logic device (PLD) such as an FPGA. In a reconfigurable hardware circuit, the process of the processor loading a configuration file to configure the hardware circuit can be understood as the processor loading instructions to realize the functions of some or all of the aforementioned units or modules. Furthermore, the processor may also be a hardware circuit designed for artificial intelligence, which can be understood as an ASIC, such as a neural network processing unit (NPU), a tensor processing unit (TPU), or a deep learning processing unit (DPU).

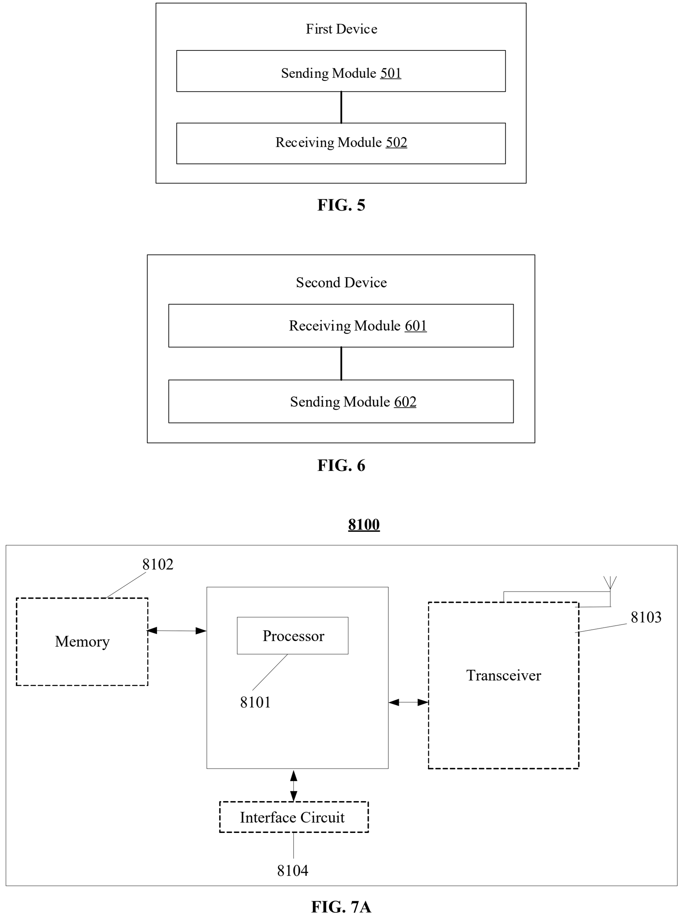

FIG. 5 is a structural schematic diagram of a first device according to an embodiment of the present disclosure. As shown in FIG. 5, the first device provided in this embodiment includes:
a sending module 501, configured to send a first transmission to a second device, where the first transmission is used for triggering an enhanced transmission between the second device and the first device;
a receiving module 502, configured to receive a second transmission sent by the second device, where the second transmission is an enhanced transmission performed by the second device based on the first transmission.

The sending module 501 and the receiving module 502 are configured to perform the communication steps related to sending and receiving, respectively, executed by the first device in any of the communication methods described above. Details are not repeated here.

In some embodiments, the first device further includes one or more processing modules configured to perform information processing.

FIG. 6 is a structural schematic diagram of a second device according to an embodiment of the present disclosure. As shown in FIG. 6, the second device provided in this embodiment includes:
a receiving module 601, configured to receive a first transmission sent by a first device, where the first transmission is used for triggering an enhanced transmission between the second device and the first device;
a sending module 602, configured to send a second transmission to the first device in response to the triggering of the first transmission, where the second transmission is an enhanced transmission performed by the second device based on the first transmission.

In some embodiments, the second device further includes one or more processing modules configured to perform information processing.

The receiving module 601 and the sending module 602 are configured to perform the communication steps related to receiving and sending, respectively, executed by the second device in any of the communication methods described above. Details are not repeated here.

FIG. 7A is a structural schematic diagram of a communication device 8100 according to an embodiment of the present disclosure. The communication device 8100 may be a terminal or a network device (e.g., an access network device or a core network device), or a chip, a chip system, or a processor that supports a terminal in implementing any of the above methods, or a chip, a chip system, or a processor that supports a network device in implementing any of the above methods. The communication device 8100 may be used to implement the communication methods described in the above method embodiments. For specific details, reference may be made to the descriptions in the above method embodiments.

As shown in FIG. 7A, the communication device 8100 includes one or more processors 8101. The processor 8101 may be a general-purpose processor or a dedicated processor, such as a baseband processor or a central processing unit (CPU). The baseband processor may be used to process communication protocols and communication data. The central processing unit may be used to control the communication device (e.g., a base station, a baseband chip, a terminal device, a terminal device chip, a DU, or a CU), execute programs, and process program data. The processor 8101 is configured to invoke instructions to cause the communication device 8100 to execute any of the above communication methods.

In some embodiments, the communication device 8100 further includes one or more memories 8102, configured to store instructions. Optionally, all or part of the memories 8102 may also be located outside the communication device 8100.

In some embodiments, the communication device 8100 further includes one or more transceivers 8103. When the communication device 8100 includes one or more transceivers 8103, the communication steps such as sending and receiving in the above method are performed by the transceiver 8103, and other steps are performed by the processor 8101.

In some embodiments, a transceiver may include a receiver and a transmitter, which may be separate or integrated. Optionally, terms such as transceiver, transceiver unit, transceiver machine, and transceiver circuit may be used interchangeably; terms such as transmitter, transmitting unit, transmitter machine, and transmitting circuit may be used interchangeably; and terms such as receiver, receiving unit, receiver machine, and receiving circuit may be used interchangeably.

Optionally, the communication device 8100 further includes one or more interface circuits 8104, connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described herein is not limited thereto. The structure of the communication device 8100 is not limited by FIG. 7A. The communication device may be a standalone device or may be part of a larger device. For example, the communication device may be: (1) a standalone integrated circuit (IC), or a chip, or a chip system or subsystem; (2) a set of one or more ICs, optionally, the IC set may also include storage components for storing data and programs; (3) an ASIC, such as a modem (Modem); (4) a module that can be embedded in other devices; (5) a receiver, terminal device, smart terminal device, cellular phone, wireless device, handheld device, mobile unit, vehicle-mounted device, network device, cloud device, artificial intelligence device and the like; (6) others.

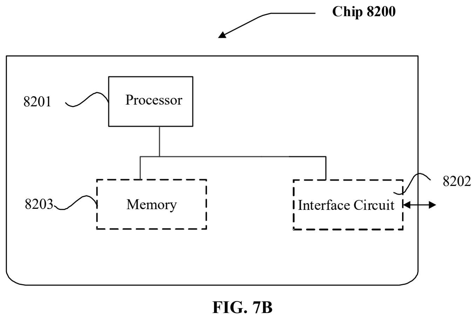

FIG. 7B is a structural schematic diagram of a chip 8200 according to an embodiment of the present disclosure. For the case where the communication device is a chip or a chip system, reference may be made to the structural schematic diagram of the chip 8200 shown in FIG. 7B, but it is not limited thereto.

The chip 8200 includes one or more processors 8201. The processor 8201 is configured to invoke instructions to cause the chip 8200 to execute any of the above communication methods.

In some embodiments, the chip 8200 further includes one or more interface circuits 8202, connected to a memory 8203. The interface circuit 8202 may be configured to receive signals from the memory 8203 or other devices, and may be configured to send signals to the memory 8203 or other devices. For example, the interface circuit 8202 may read instructions stored in the memory 8203 and send the instructions to the processor 8201. Optionally, terms such as interface circuit, interface, transceiver pin, and transceiver may be used interchangeably.

In some embodiments, the chip 8200 further includes one or more memories 8203, configured to store instructions. Optionally, all or part of the memories 8203 may be located outside the chip 8200.

The present disclosure also provides a storage medium storing instructions which, when executed on a communication device, cause the communication device to execute any of the above methods. Optionally, the storage medium is an electronic storage medium. Optionally, the storage medium is a computer-readable storage medium, but it may also be a storage medium readable by other devices. Optionally, the storage medium may be a non-transitory storage medium, but it may also be a transitory storage medium.

The present disclosure also provides a program product which, when executed by a communication device, causes the communication device to execute any of the above communication methods. Optionally, the program product is a computer program product.

The present disclosure also provides a computer program which, when run on a computer, causes the computer to execute any of the above communication methods.

Other embodiments of the present disclosure will readily occur to those skilled in the art upon consideration of the specification and practice of the invention disclosed herein. The present disclosure is intended to cover any variations, uses, or adaptations of the present disclosure that follow the general principles of the present disclosure and include common knowledge or customary techniques in the art not disclosed herein. The specification and examples are to be considered exemplary only, and the true scope and spirit of the present disclosure are indicated by the following claims.

It should be understood that the present disclosure is not limited to the precise structures described above and shown in the accompanying drawings, and various modifications and changes may be made without departing from the scope of the present disclosure. The scope of the present disclosure is limited only by the appended claims.

## Claims

1. A communication method, comprising:
sending, by a first device, a first transmission to a second device, wherein the first transmission is used for triggering an enhanced transmission between the second device and the first device;
receiving, by the first device, a second transmission sent by the second device, wherein the second transmission is an enhanced transmission performed by the second device based on the first transmission.

2. The method according to claim 1, wherein sending, by the first device, the first transmission to the second device comprises:
repeatedly sending, by the first device, the first transmission to the second device,
wherein a single sending of the first transmission is used for triggering a single sending of the second transmission by the second device.

3. The method according to claim 2, wherein the first transmission comprises:
a first indication, used for determining, by the second device, a remaining number of triggering of the first transmission.

4. The method according to claim 3, wherein the first indication indicates at least one of the followings:
a total number of triggering of the first device;
a current number of triggering of the first device;
a remaining number of triggering of the first device;
a last time triggering of the first device.

5. The method according to claim 3 or 4, comprising at least one of the followings:
the first indication, carried in the first transmission sent for a first time by the first device, indicates a total number of triggering of the first transmission; or,
the first indication, carried in the first transmission sent for a last time by the first device, indicates that the first transmission sent this time is used for a last time triggering.

6. The method according to any one of claims 1 to 5, wherein receiving, by the first device, second transmission sent by the second device, comprising:
receiving, by the first device, multiple second transmissions repeatedly sent by the second device.

7. The method according to claim 6, wherein the second transmission comprises:
a second indication, indicating information of being triggered of the second device.

8. The method according to claim 7, wherein the second indication indicates at least one of the followings:
an expected total number of times of being triggered;
a current number of times of being triggered;
an expected remaining number of times of being triggered;
an expected last time of being triggered.

9. The method according to claim 8, comprising at least one of the followings:
the second indication, carried in a first one of second transmissions sent by the second device, indicates a total number of times of being triggered expected by the second device; and/or,
the second indication, carried in a last one of second transmissions sent by the second device, indicates that a triggering corresponding to a second transmission sent this time is a last time of being triggered expected by the second device.

10. The method according to claim 1, wherein receiving, by the first device, the second transmission sent by the second device comprises:
receiving the second transmission processed by redundancy encoding and sent by the second device.

11. The method according to claim 1 or 10, wherein sending, by the first device, the first transmission to the second device comprises:
sending, by the first device, the first transmission processed by redundancy encoding to the second device.

12. The method according to claim 10 or 11, wherein the redundancy encoding comprises:
repetition coding, wherein, for the repetition coding, one bit to be encoded is repetition-coded into N identical bits, where N is a positive integer greater than or equal to 2; or
mapping coding, wherein, for the mapping coding, one bit is mapped to a bit sequence comprising M bits, where M is a positive integer greater than or equal to 2, and the M bits of the bit sequence have identical or different bit values.

13. The method according to claim 1, wherein receiving, by the first device, the second transmission sent by the second device comprises:
receiving multiple second transmissions repeatedly sent on at least one channel or at least one subchannel, wherein the multiple second transmissions are triggered by a single first transmission.

14. The method according to claim 13, wherein,
the at least one channel or the at least one subchannel is configured by a network device; or,
the at least one channel or the at least one subchannel is specified by a protocol; or,
the at least one channel or the at least one subchannel is selected by the second device.

15. The method according to claim 1, wherein receiving, by the first device, the second transmission sent by the second device comprises:
receiving multiple second transmissions sent on at least one transmission occasion,
wherein the multiple second transmissions are triggered by a single first transmission.

16. The method according to claim 15, comprising at least one of the followings:
the at least one transmission occasion is configured by a network device;
the at least one transmission occasion is specified by a protocol;
the at least one transmission occasion is selected by the second device.

17. A communication method, comprising:
receiving, by a second device, a first transmission sent by a first device, wherein the first transmission is used for triggering an enhanced transmission between the second device and the first device;
sending, by the second device, a second transmission to the second device in response to triggering of the first transmission, wherein the second transmission is an enhanced transmission performed by the second device based on the first transmission.

18. The method according to claim 17, wherein receiving, by the second device, information sent by the first device comprises:
receiving the first transmission repeatedly sent by the second device, wherein a single sending of the first transmission is used for triggering a single sending of the second transmission by the second device.

19. The method of claim 18, wherein the first transmission comprises:
a first indication, used for determining, by the second device, a remaining number of triggering of the first transmission.

20. The method of claim 19, wherein the first indication indicates at least one of the followings:
a total number of triggering of the first device;
a current number of triggering of the first device;
a remaining number of triggering of the first device;
a last time triggering of the first device.

21. The method according to claim 19 or 20, comprising at least one of the followings:
the first indication, carried in the first transmission sent for a first time by the first device, indicates a total number of triggering of the first transmission; or,
the first indication, carried in the first transmission sent for a last time by the first device, indicates that the first transmission sent this time is used for a last time triggering.

22. The method according to any one of claims 18 to 21, wherein sending the second transmission to the second device in response to the triggering of the first transmission comprises:
repeatedly sending the second transmission to the second device in response to the triggering of the first transmission.

23. The method according to claim 22, wherein the second transmission comprises:
a second indication, indicating information of being triggered of the second device.

24. The method of claim 23, wherein the second indication indicates at least one of the followings:
an expected total number of times of being triggered;
a current number of times of being triggered;
an expected remaining number of times of being triggered;
an expected last time of being triggered.

25. The method according to claim 24, wherein,
the second indication carried in a last one of second transmissions sent by the second device, indicates the expected total number of times of being triggered; and/or,
the second indication carried in the last one of second transmissions sent by the second device, indicates that a triggering corresponding to a second transmission sent this time is a last time of being triggered expected by the second device.

26. The method according to claim 17, wherein, sending the second transmission to the second device in response to the triggering of the first transmission comprises:
sending the second transmission processed by redundancy encoding to the second device in response to the triggering of the first transmission.

27. The method according to claim 17 or 26, wherein receiving, by the second device, the first transmission sent by the first device comprises:
receiving the first transmission processed by redundancy encoding and sent by the first device.

28. The method according to claim 26 or 27, wherein the redundancy encoding comprises:
repetition coding, wherein, for the repetition coding, one bit to be encoded is repetition-coded into N identical bits, where N is a positive integer greater than or equal to 2; or
mapping coding, wherein, for the mapping coding, one bit is mapped to a bit sequence comprising M bits; where M is a positive integer greater than or equal to 2, and the M bits of the bit sequence have identical or different bit values.

29. The method according to claim 17, wherein sending the second transmission to the second device in response to the triggering of the first transmission comprises:
repeatedly sending the second transmission on multiple channels or multiple subchannels to the second device in response to the triggering of the first transmission.

30. The method according to claim 29, wherein, the at least one channel or the at least one subchannel is configured by a network device; or,
the at least one channel or the at least one subchannel is specified by a protocol; or,
the at least one channel or the at least one subchannel is selected by the second device.

31. The method according to claim 30, further comprising:
selecting the at least one channel or the at least one subchannel based on a device identity of the second device, a task identity associated with the second transmission, and/or a device identity of the first device.

32. The method according to claim 17, wherein sending the second transmission to the first device in response to the triggering of the first transmission comprises:
repeatedly sending the second transmission to the second device on multiple transmission occasions in response to the triggering of the first transmission.

33. The method according to claim 32, wherein,
the at least one transmission occasion is configured by a network device;
the at least one transmission occasion is specified by a protocol;
the at least one transmission occasion is selected by the second device.

34. The method according to claim 33, further comprising:
selecting the at least one transmission occasion based on a device identity of the second device, a task identity associated with the second transmission, and/or a device identity of the first device.

35. A first device, comprising:
a sending module, configured to send a first transmission to a second device; wherein the first transmission is used for triggering an enhanced transmission between the second device and the first device;
a receiving module, configured to receive a second transmission sent by the second device, wherein the second transmission is an enhanced transmission performed by the second device based on the first transmission.

36. A second device, comprising:
a receiving module, configured to receive a first transmission sent by a first device, wherein the first transmission is used for triggering an enhanced transmission between the second device and the first device;
a sending module, configured to send a second transmission to the second device in response to a triggering of the first transmission, wherein the second transmission is an enhanced transmission performed by the second device based on the first transmission.

37. A communication device, comprising:
one or more processors;
one or more memories configured to store instructions;
wherein the processor is configured to, through calling an instruction, cause the communication device to implement the communication method according to any one of claims 1 to 16 or claims 17 to 34.

38. A storage medium storing an instruction, wherein the instruction, upon being executed on a communication device, causes the communication device to implement the communication method according to any one of claims 1 to 16 or claims 17 to 34.
